# EUROPÄISCHE PATENTANMELDUNG

(11) **EP 4 242 765 A1**
(43) Veröffentlichungstag der Anmeldung: **13.09.2023**
(21) Anmeldenummer: 22161338.3
(22) Anmeldetag: 10.03.2022
(51) Int. Cl.: G05B 23/02, H04L 67/12, H04L 67/55

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Ein Leitsystem (9) für eine technische Anlage, das einen Operator Station Server (3) und einen mit dem Server verbundenen Operator Station Client (2) umfasst, wobei der Server (3) Visualisierungsinformationen an den Client (2) überträgt, und wobei der Client (2) mittels der Visualisierungsinformationen eine grafische Darbietung (1) für einen Operator erzeugt, und wobei der Client (2) eine Anforderung für eine Modifikation der Darbietung (1) von dem Operator entgegenzunehmen und an den Server (3) zu übermittelt, und wobei der Server (3) die von dem Client (2) empfangene Anforderung in einem Speicher (16) des Servers (3) hinterlegt. Der Operator Station Client (2) nimmt eine von dem Operator vorgebbare Bedingung für die Anwendung der Modifikation der grafischen Darbietung (1) entgegen und übermittelt sie an den Server (3), wobei der Server (3) die Bedingung in dem Speicher (16) des Servers (3) hinterlegt.

## Beschreibung

Die Erfindung betrifft ein Leitsystem für eine technische Anlage, insbesondere Fertigungs- oder Prozessanlage. Außerdem betrifft die Erfindung ein Verfahren zum Betreiben eines Leitsystems einer technischen Anlage.

Für die Bedienung und Beobachtung technischer Anlagen können Operatoren durch Personalisierung ihre Tätigkeit optimieren und ihre Abläufe effizienter gestalten. Eine Möglichkeit der Personalisierung sind so genannte Anwenderselektionen, über die beispielsweise zur Laufzeit Faceplate-Gruppen, Trendanzeigen, gefilterte Meldefolgeanzeigen usw. zusammengestellt, persistiert und bei Bedarf auch wieder abgerufen werden können. Anwenderselektionen stellen dabei eine Laufzeitfunktionalität dar, benötigen kein vorausgegangenes Engineering bzw. Projektierung und sind durch die Operatoren flexibel zur Laufzeit konfigurierbar und wartbar.

Tritt eine Situation ein, für die ein Operator eine Anwenderselektion erstellt hat, so muss er nach dem Stand der Technik erst die Situation erkennen (z.B. einen spezifischen Alarm wahrnehmen), sich dann daran erinnern, dass für die Situation eine Anwenderselektion existiert, die eine Anwenderselektion unter vielen identifizieren finden und öffnen. Diese ineffiziente Vorgehensweise ist auch der Grund, weshalb das Potential von Anwenderselektionen zur Laufzeit durch Operatoren bislang nicht vollständig ausgeschöpft werden konnten.

In der EP 3 876 046 A1 ist ein Leitsystem einer technischen Anlage offenbart, welches eine Anpassungen einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz einer Bedienung und Beobachtung der technischen Anlage erhöht.

Diese Aufgabe wird gelöst durch Leitsystem für eine technische Anlage mit den Merkmalen des Anspruchs 1. Außerdem wird die Aufgabe gelöst durch ein Verfahren zum Betreiben eines Leitsystems einer technischen Anlage gemäß Anspruch 9. Vorteilhafte Weiterbildungen ergeben sich aus den abhängigen Ansprüchen.

Ein erfindungsgemäßes Leitsystem umfasst wenigstens einen Operator Station Server und wenigstens einen mit dem Operator Station Server verbundenen Operator Station Client. Dabei ist der Operator Station Server dazu ausgebildet ist, Visualisierungsinformationen an den Operator Station Client zu übertragen. Der Operator Station Client ist dazu ausgebildet, mittels der Visualisierungsinformationen eine grafische Darbietung für einen Operator der technischen Anlage zu erzeugen, und der Operator Station Client ist dazu ausgebildet ist, eine Anforderung für eine Modifikation der grafischen Darbietung von dem Operator entgegenzunehmen und an den Operator Station Server zu übermitteln. Der Operator Station Server ist weiterhin dazu ausgebildet, die von dem Operator Station Client empfangene Anforderung in einem Speicher des Operator Station Servers zu hinterlegen.

Das erfindungsgemäße Leitsystem ist dadurch gekennzeichnet, dass Operator Station Client dazu ausgebildet ist, eine von dem Operator vorgebbare Bedingung für die Anwendung der Modifikation der grafischen Darbietung entgegenzunehmen und an den Operator Station Server zu übermitteln. Der Operator Station Server ist dazu ausgebildet, die Bedingung in dem Speicher des Operator Station Servers zu hinterlegen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen.

Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Eine Modifikation der grafischen Darbietung kann beispielsweise das Einblenden eines grafischen Fensters mit einem Verlauf von Messdaten aus der technischen Anlage, mit einem Bild einer Überwachungskamera, mit einer Visualisierung von technischen Objekten der technischen Anlage oder dergleichen sein. Gleichfalls kann die Modifikation im gezielten Ausblenden bestimmter Bereiche der grafischen Darbietung liegen, um verborgene grafische Objekte für den Operator unmittelbar erkennbar zu machen.

Der Operator Station Client des erfindungsgemäßen Leitsystems nimmt nicht nur die Anforderung des Operators zur Vornahme einer Modifikation entgegen, sondern er nimmt zusätzlich eine Bedingung für die Anwendung dieser Modifikation entgegen und hinterlegt sie in dem Speicher des Operator Station Servers. Diese von dem Operator vorgegebene Information kann von dem Leitsystem oder von zusätzlichen, externen Recheneinheiten genutzt werden, um die Modifikation zielgerichtet beim Vorliegen der vorgegebenen Bedingung vorzunehmen.

Bevorzugt ist der Operator Station Client dazu ausgebildet, für den Fall, dass die Bedingung erfüllt ist, die Modifikation der grafischen Darbietung automatisiert vorzunehmen. Das Leitsystem überwindet die im einleitenden Teil ausgeführten Nachteile bekannter Leitsysteme und kann dazu beitragen, dass das Potential von individuellen Modifikationen der grafischen Darbietung für Operatoren voll ausgeschöpft werden kann.

Besonders bevorzugt ist der Operator Station Server dazu ausgebildet, automatisiert zu prüfen, ob die Bedingung erfüllt ist, und für den Fall, dass die Bedingung erfüllt ist, den Operator Station Client dahingehend zu benachrichtigen. Dieser kann dann, wie zuvor erläutert, automatisiert die Modifikation der grafischen Darbietung vornehmen. Zur Prüfung, ob die Bedingung erfüllt ist, kann der Operator Station Server auf Daten aus der technischen Anlage zugreifen, was anhand des Ausführungsbeispiels näher erläutert wird.

Die grafische Darbietung kann ein Anlagenbild der technischen Anlage darstellen. Im Falle einer Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

Im Rahmen einer vorteilhaften Weiterbildung der Erfindung stellt die Bedingung ein Ereignis dar, wobei der Operator Station Client dazu ausgebildet ist, beim Eintreten des Ereignisses die Modifikation der grafischen Darbietung vorzunehmen. Die Bedingung kann sich auch aus einer logischen Verknüpfung einer Mehrzahl von Ereignissen ergeben. Diese bedeutet, dass die Bedingung als erfüllt gilt, wenn beispielsweise ein Ereignis A, ein Ereignis B und ein Ereignis C eintreten.

Ein Ereignis kann dabei ein Öffnen eines Anlagebildes, ein Öffnen eines Faceplates eines technischen Objektes der technischen Anlage, ein Auftreten eines Alarms, eine Parameteränderung eines technischen Objektes der technischen Anlage, ein Betriebszustand eines technischen Objektes der technischen Anlage, ein Erreichen eines bestimmten Zustandes einer von der technischen Anlage abzuarbeitenden Schrittfolge oder ein Erreichen eines bestimmten Gütekriteriums beim Betrieb der technischen Anlage darstellen.

Die Bedingung kann alternativ oder zusätzlich auch eine Identität, eine Rolle oder einen Standort eines den Operator Station Clients bedienenden Operators darstellen. Wenn sich ein Operator beispielsweise innerhalb eines bestimmten Bereiches der technischen Anlage an dem Operator Station Client anmeldet, kann ihm automatisiert eine bestimmte Modifikation der standardmäßigen grafischen Darbietung dargeboten werden, um speziellen Anforderungen des bestimmten Bereiches (wie speziellen Umweltbedingungen) gerecht zu werden. Auch eine Identität bzw. eine Rolle eines Operators können eine Bedingung (ggf. zusätzlich zu den bereits erwähnten Bedingungen / Ereignissen) darstellen, die für die Modifikation der grafischen Darbietung erfüllt sein muss. Eine "Rolle" kann dabei bedeuten, dass dem betreffenden Operator in Ausübung seiner Rolle bestimmte Funktionsrechte zustehen, was ggf. bestimmte Modifikation der grafischen Darbietung nicht erlaubt. Diese Funktionsrechte betreffen in der Regel eine Bedienung und Beobachtung bestimmter Komponenten der technischen Anlage. Beispielsweise können einem ersten Operator Beobachtungsrechte für einige Komponenten und Bedienrechte für andere Komponenten zugewiesen sein, während einem zweiten Operator für alle Komponenten Beobachtungs- und Bedienrechte zugewiesen sind.

Die Aufgabe wird zudem gelöst durch ein Verfahren zum Betreiben eines Leitsystems einer technischen Anlage, insbesondere Fertigungs- oder Prozessanlage, das wenigstens einen Operator Station Server und wenigstens einen Operator Station Client umfasst, wobei der Operator Station Server dazu ausgebildet, Visualisierungsinformationen an den Operator Station Client zu übertragen, und wobei der Operator Station Client dazu ausgebildet ist, mittels der Visualisierungsinformationen eine grafische Darbietung für einen Operator der technischen Anlage zu erzeugen, das Verfahren umfassend:
a) Entgegennehmen einer Anforderung für eine Modifikation der grafischen Darbietung und einer Bedingung für die Anwendung der Modifikation von einem Operator der technischen Anlage durch den Operator Station Client,
b) Übertragen der Anforderung und der Bedingung von dem Operator Station Client an den Operator Station Server,
c) Hinterlegen der Anforderung und der Bedingung in einem Speicher des Operator Station Servers.

Der Operator Station Client kann für den Fall, dass die Bedingung erfüllt ist, die Modifikation der grafischen Darbietung automatisiert vornehmen.

Weiterhin kann der Operator Station Server automatisiert prüfen, ob die Bedingung erfüllt ist, und für den Fall, dass die Bedingung erfüllt ist, den Operator Station Client dahingehend benachrichtigt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine grafische Darbietung einer technischen Anlage gemäß einem ersten Aspekt;
- FIG 2: eine grafische Darbietung einer technischen Anlage gemäß einem zweiten Aspekt;
- FIG 3: eine grafische Darbietung einer technischen Anlage gemäß einem dritten Aspekt; und
- FIG 4: ein erfindungsgemäßes Leitsystem in einer schematischen Darstellung.

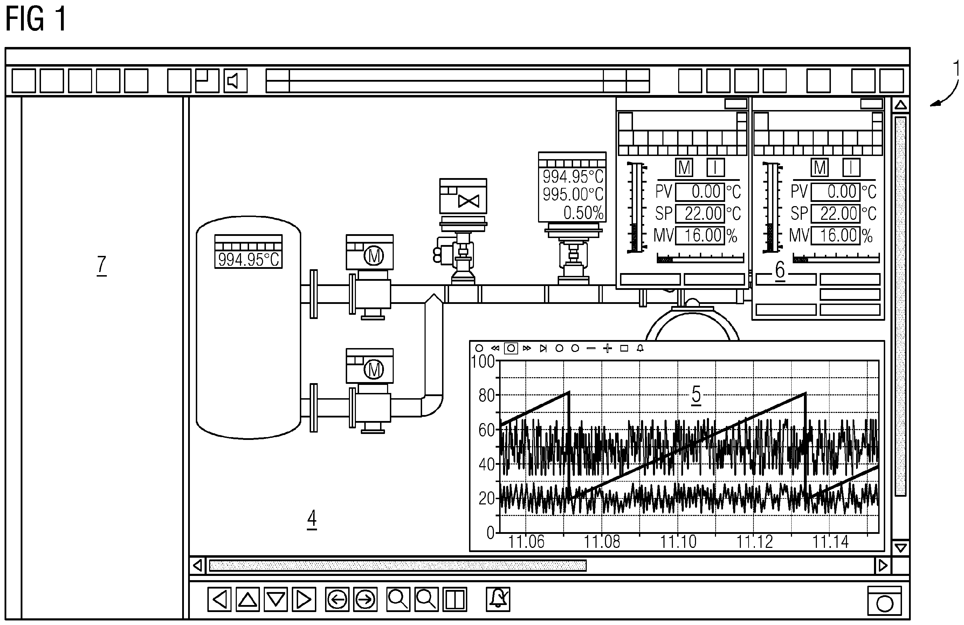

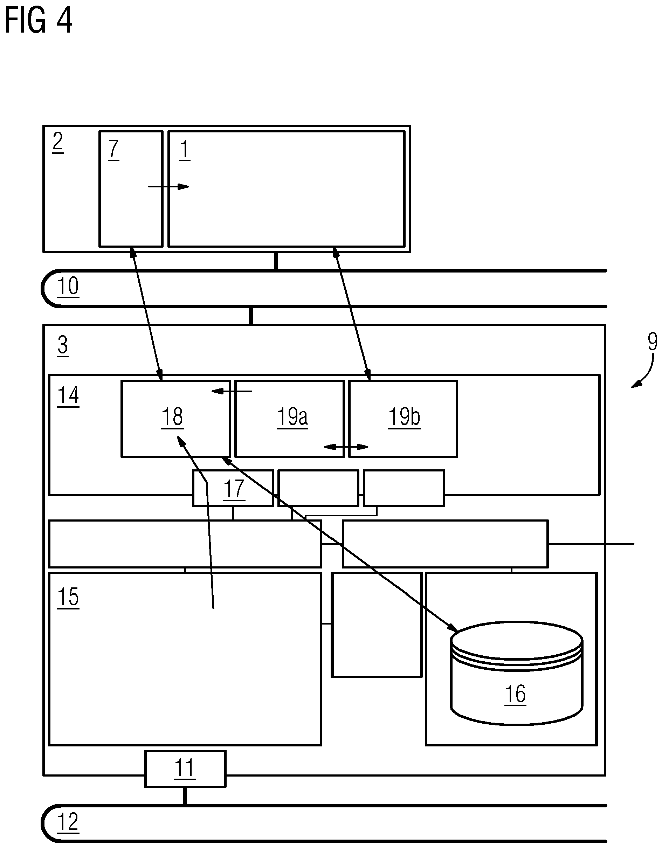

In FIG 1 ist ein eine grafische Benutzeroberfläche als grafische Darbietung 1 dargestellt, die ein Operator Station Client 2 eines Leitsystems 9 einer als Prozessanlage ausgebildeten technischen Anlage einem Operator der Prozessanlage zum Zwecke eines Bedienens und Beobachtens der technischen Anlage darbietet. Die hierfür notwendigen Visualisierungsinformationen erhält der Operator Station Client von einem Operator Station Server 3 des Leitsystems 9 (vgl. FIG 4).

In der Benutzeroberfläche 1 ist ein Anlagenbild 4 dargestellt, welches wiederum eine Mehrzahl von grafischen Repräsentationen einzelner Prozessobjekte der Prozessanlage umfasst (u.a. Heizkessel, Pumpe, Ventil etc.). Der Operator kann Elemente der Benutzeroberfläche 1 auswählen, die im Rahmen einer späteren Modifikation der grafischen Benutzeroberfläche 1 verwendet werden sollen. Ein erstes Element 5 stellt einen zeitlichen Verlauf von Prozessmesswerten dar. Ein zweites Element 6 stellt sogenannte Faceplates von Prozessobjekten dar, mittels derer der Operator die Prozessobjekte bedienen und beobachten kann.

Der Operator legt die beiden Elemente 5, 6 (grafisch) in einem Selektionsdienst 7 (genauer: in dessen grafischer Schnittstelle) ab. Dies bedeutet dabei, dass das jeweilige Element 5, 6 beim Vorliegen einer bestimmten Bedingung zu einem späteren Zeitpunkt wieder in der grafischen Benutzeroberfläche 1 geöffnet und dargestellt wird. In dem Selektionsfenster 8 kann der Operator bestimmen, unter welcher Bedingung dieses Öffnen stattfinden soll. So kann er beispielsweise festlegen, dass das erste Element 5 immer dann geöffnet wird, wenn ein Standardanlagenbild 8 (ein "Startbildschirm") geöffnet wird. Das zweite Element 6 kann beispielsweise dann geöffnet und dargestellt werden, wenn ein vorgebbarer Alarm auftritt.

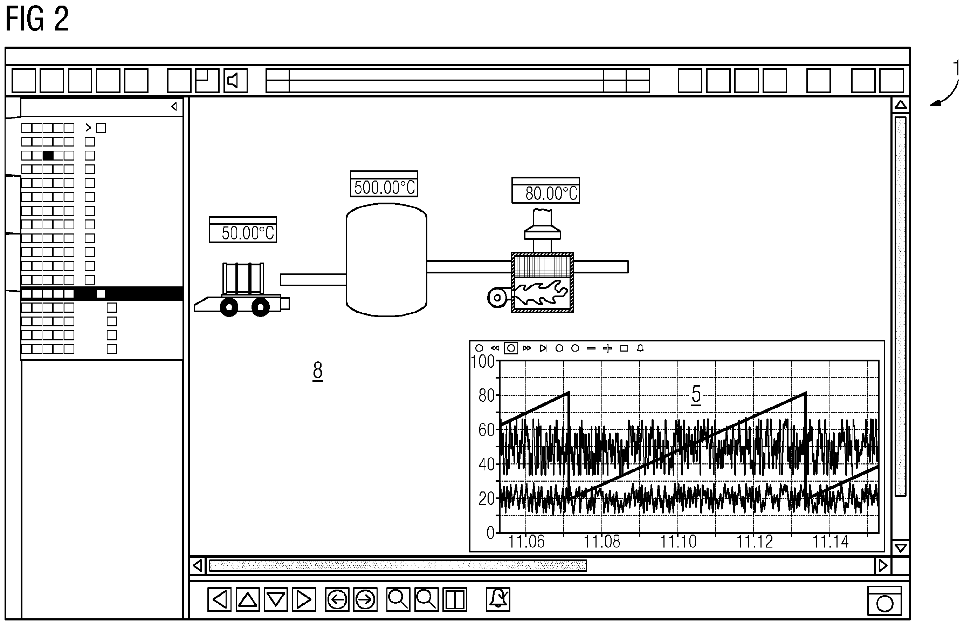

In FIG 2 ist ein solches Standardanlagenbild 8 dargestellt, dessen Öffnen durch den Operator (oder durch einen weiteren Operator) automatisiert das Öffnen des ersten Elements 5 triggert. Der Operator muss dies - im Gegensatz zum Stand der Technik - nicht mühsam manuell vornehmen, was die Bedienung und Beobachtung der Prozessanlage deutlich erleichtert. Das Öffnen des Standardanlagenbildes 8 stellt dabei ein Ereignis bzw. eine Bedingung dar, dessen Erfüllung den Operator Station Client 2 dazu triggert, eine Modifikation der grafischen Darbietung, nämlich ein Öffnen des ersten Elementes 5 vorzunehmen.

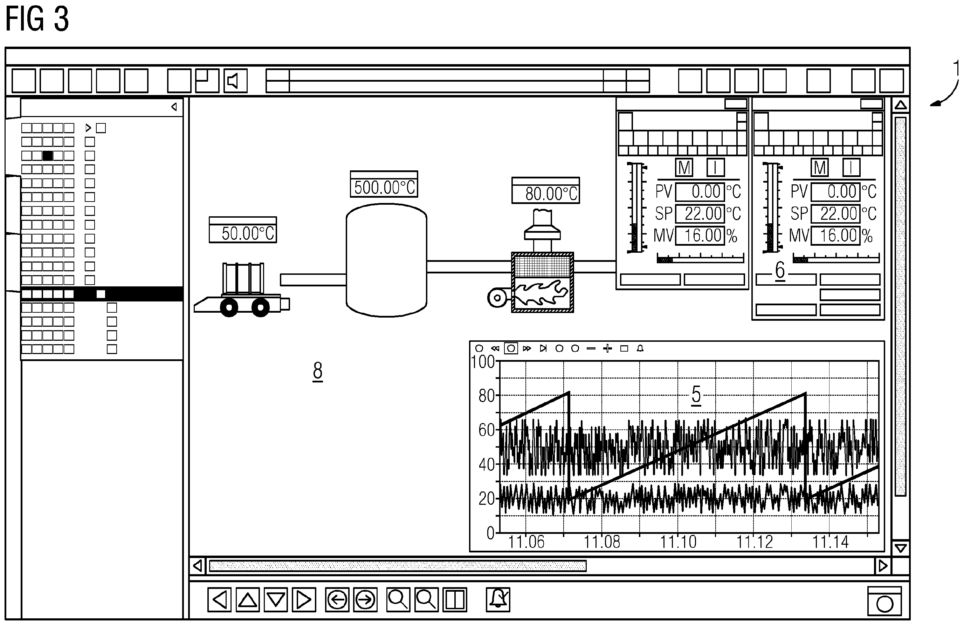

FIG 3 zeigt im Vergleich zu FIG 2 zusätzlich ein visuell dargestelltes zweites Element 6, welches durch das Ereignis / die Bedingung einer aufgekommenen Alarmmeldung durch den Operator Station Client 2 automatisiert geöffnet wurde.

In FIG 4 ist das Leitsystem 9 für die Prozessanlage schematisch dargestellt. Das Leitsystem 9 umfasst den zuvor bereits genannten Operator Station Client 2 und den Operator Station Server 3. Der Operator Station Server 3 und der Operator Station Client 2 sind über einen Terminalbus 10 miteinander und optional mit nicht dargestellten weiteren Komponenten des Leitsystems 9 wie einem Engineering Station Server oder einem Archivserver verbunden.

Ein Benutzer bzw. Operator kann zum Zwecke des Bedienens und Beobachtens über den Operator Station Client 2 mittels des Terminalbus 10 auf den Operator Station Server 3 zugreifen. Der Terminalbus 10 kann, ohne sich darauf zu beschränken, beispielsweise als Industrial Ethernet ausgebildet sein.

Der Operator Station Server 3 weist eine Geräteschnittstelle 11 auf, die mit einem Anlagenbus 12 verbunden ist. Über diese Geräteschnittstelle 11 kann der Operator Station Server 3 mit einem Automatisierungsgerät 13 (nicht dargestellt) sowie mit optional vorhandenen weiteren Komponenten der verfahrenstechnischen Anlage wie Peripheriegeräten (nicht dargestellt) kommunizieren. Der Anlagenbus 12 kann, ohne sich darauf zu beschränken, beispielsweise als Industrial Ethernet ausgebildet sein.

Auf dem Operator Station Server 3 sind (unter anderem) ein Visualisierungsdienst 14, ein Prozessabbild 15 und ein Speicher 16 implementiert. Der in dem Operator Station Server 3 integrierte Visualisierungsdienst 14 initiiert eine Übertragung von Visualisierungsinformationen an den Operator Station Client 2. Der Operator Station Client 2 ist dazu ausgebildet, eine grafische Darbietung, insbesondere von Anlagenbildern, zum Bedienen und Beobachten der Prozessanlage darzustellen.

In dem Prozessabbild 15 des Operator Station Servers 3 ist eine Momentaufnahme der (Signal-)Zustände von mit dem Operator Station Server 3 verbundenen Geräten und/oder Applikationen (in der Figur nicht dargestellt) hinterlegt. Ein Alarmdienst 17 kann Alarmmeldungen aus dem Prozessabbild 15 auslesen und beispielsweise eine grafische Aggregation der Alarmmeldungen erzeugen, die der Operator Station Client 2 darstellen kann.

Ein Benutzerauswahldienst 18 hat Zugriff auf den Speicher 16 des Operator Station Servers 3. Dort können Anwenderprofile und persönliche Einstellungen von Operatoren/Bedienern der Prozessanlage hinterlegt werden. Diese können auch für weitere Operatoren/Bediener zugänglich sein. Der Benutzerauswahldienstes 18 hat Zugriff auf den Selektionsdienst 7, in welchem der Operator, wie anhand der Figuren 1 bis 3 erläutert, die Anforderungen und Bedingungen für die automatisierte grafische Modifikation der grafischen Darbietung des Operator Station Clients 2 vorgibt. Er hinterlegt diese Daten nach dem Empfang von dem Operator Station Client 2 in dem Speicher 16 des Operator Station Servers 3.

Ein Benutzeroberflächendienst 19a, 19b überwacht die von dem Operator Station Client 2 dargebotene grafische Benutzeroberfläche 1 und teilt dem Benutzerauswahldienst 18 etwaige, von einem Operator vorgenommene Änderungen an der grafischen Benutzeroberfläche 1 mit. Eine solche Änderung kann beispielsweise ein Öffnen oder Schließen eines Anlagenbildes oder eines sonstigen Elementes sein. Der Alarmdienst 17 teilt dem Benutzerauswahldienst 18 das Auftreten etwaiger Alarmmeldungen mit.

Der Benutzerauswahldienst 18 prüft dabei automatisiert, ob die in dem Speicher 16 hinterlegten Bedingungen für eine Modifikation der grafischen Darbietung erfüllt sind und initiiert, für den Fall, dass die Bedingung erfüllt ist, die Modifikation, indem sie den Operator Station Client 2 entsprechend triggert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (9) für eine technische Anlage, insbesondere Fertigungs- oder Prozessanlage, das wenigstens einen Operator Station Server (3) und wenigstens einen mit dem Operator Station Server verbundenen Operator Station Client (2) umfasst, wobei der Operator Station Server (3) dazu ausgebildet ist, Visualisierungsinformationen an den Operator Station Client (2) zu übertragen,
und wobei der Operator Station Client (2) dazu ausgebildet ist, mittels der Visualisierungsinformationen eine grafische Darbietung (1) für einen Operator der technischen Anlage zu erzeugen,
und wobei der Operator Station Client (2) dazu ausgebildet ist, eine Anforderung für eine Modifikation der grafischen Darbietung (1) von dem Operator entgegenzunehmen und an den Operator Station Server (3) zu übermitteln,
und wobei der Operator Station Server (3) dazu ausgebildet ist, die von dem Operator Station Client (2) empfangene Anforderung in einem Speicher (16) des Operator Station Servers (3) zu hinterlegen,
**dadurch gekennzeichnet, dass**
der Operator Station Client (2) dazu ausgebildet ist, eine von dem Operator vorgebbare Bedingung für die Anwendung der Modifikation der grafischen Darbietung (1) entgegenzunehmen und an den Operator Station Server (3) zu übermitteln, wobei der Operator Station Server (3) dazu ausgebildet ist, die Bedingung in dem Speicher (16) des Operator Station Servers (3) zu hinterlegen.

2. Leitsystem (9) gemäß Anspruch 1, bei dem der Operator Station Client (2) dazu ausgebildet ist, für den Fall, dass die Bedingung erfüllt ist, die Modifikation der grafischen Darbietung (1) automatisiert vorzunehmen.

3. Leitsystem (9) nach Anspruch 1 oder 2, bei dem der Operator Station Server (3) dazu ausgebildet ist, automatisiert zu prüfen, ob die Bedingung erfüllt ist, und für den Fall, dass die Bedingung erfüllt ist, den Operator Station Client (2) dahingehend zu benachrichtigen.

4. Leitsystem (9) gemäß einem der vorangegangenen Ansprüche, bei dem die grafische Darbietung (1) ein Anlagenbild (4, 8) der technischen Anlage darstellt.

5. Leitsystem (9) gemäß einem der vorangegangenen Ansprüche, bei dem die Bedingung ein Ereignis darstellt, wobei der Operator Station Client (2) dazu ausgebildet ist, beim Eintreten des Ereignisses die Modifikation der grafischen Darbietung (1) vorzunehmen.

6. Leitsystem (9) gemäß Anspruch 5, bei dem sich die Bedingung aus einer logischen Verknüpfung einer Mehrzahl von Ereignisse ergibt.

7. Leitsystem (9) gemäß Anspruch 5 oder 6, bei dem ein Ereignis ein Öffnen eines Anlagebildes (4, 8) , ein Öffnen eines Faceplates eines technischen Objektes der technischen Anlage, ein Auftreten eines Alarms, eine Parameteränderung eines technischen Objektes der technischen Anlage, ein Betriebszustand eines technischen Objektes der technischen Anlage, ein Erreichen eines bestimmten Zustandes einer von der technischen Anlage abzuarbeitenden Schrittfolge oder ein Erreichen eines bestimmten Gütekriteriums beim Betrieb der technischen Anlage darstellt.

8. Leitsystem (9) gemäß einem der vorangegangenen Ansprüche, bei dem die Bedingung eine Identität, eine Rolle oder einen Standort eines den Operator Station Client (2) bedienenden Operators darstellt.

9. Verfahren zum Betreiben eines Leitsystems (9) einer technischen Anlage, insbesondere Fertigungs- oder Prozessanlage, das wenigstens einen Operator Station Server (3) und wenigstens einen Operator Station Client (2) umfasst, wobei der Operator Station Server (3) dazu ausgebildet, Visualisierungsinformationen an den Operator Station Client (2) zu übertragen,
und wobei der Operator Station Client (2) dazu ausgebildet ist, mittels der Visualisierungsinformationen eine grafische Darbietung (1) für einen Operator der technischen Anlage zu erzeugen, das Verfahren umfassend:
a) Entgegennehmen einer Anforderung für eine Modifikation der grafischen Darbietung (1) und einer Bedingung für die Anwendung der Modifikation von einem Operator der technischen Anlage durch den Operator Station Client (2),
b) Übertragen der Anforderung und der Bedingung von dem Operator Station Client (2) an den Operator Station Server (3),
c) Hinterlegen der Anforderung und der Bedingung in einem Speicher (16) des Operator Station Servers (3).

10. Verfahren nach Anspruch 9, bei dem der Operator Station Client (2) für den Fall, dass die Bedingung erfüllt ist, die Modifikation der grafischen Darbietung (1) automatisiert vornimmt.

11. Verfahren nach Anspruch 9 oder 10, bei dem der Operator Station Server (3) automatisiert prüft, ob die Bedingung erfüllt ist, und für den Fall, dass die Bedingung erfüllt ist, den Operator Station Client (2) dahingehend benachrichtigt.
